# EUROPÄISCHE PATENTSCHRIFT

(11) **EP 0 954 459 B1**
(45) Veröffentlichungstag und Bekanntmachung des Hinweises auf die Patenterteilung: **07.11.2001**
(21) Anmeldenummer: 98909296.0
(22) Anmeldetag: 28.01.1998
(51) Int. Cl.: B60R 13/00

(54) **BEFESTIGUNGSELEMENT**
FIXING ELEMENT
ELEMENT DE FIXATION

(30) Priorität: 31.01.1997 DE 19703491
(43) Veröffentlichungstag der Anmeldung: 10.11.1999
(73) Patentinhaber: Mecano Rapid GmbH, 69123 Heidelberg (DE)
(72) Erfinder: FRIEDRICH, Elvira, D-65719 Hofheim (DE); DEMEL, Otto, D-69124 Heidelberg (DE); SENFTLEBER, Markus, D-68723 Schwetzingen (DE); DETLOFF, Andreas, D-69181 Leimen (DE)
(74) Vertreter: Gornott, Dietmar, Dipl.-Ing.
(86) Internationale Anmeldenummer: DE9800258
(87) Internationale Veröffentlichungsnummer: WO9833679

(56) Entgegenhaltungen:
- EP-A- 0 627 564
- DE-A- 3 621 772
- DE-U- 29 519 375
- GB-A- 2 262 564
- US-A- 5 058 356
- US-A- 5 195 793

## Beschreibung

Die Erfindung betrifft ein Befestigungselement zur Verbindung von Kunststoffteilen, insbesondere Verkleidungen, an Blechen, insbesondere Karosserieteilen eines Kraftfahrzeugs, bestehend aus einem Kunststoffkörper mit einem Fußteil zum Einsetzen in ein bügelförmiges Halteteil des Kunststoffteils und einem Kopfteil, welches im montierten Zustand durch eine Öffnung im Blech ragt.

Die gattungsbildende GB 2 262 564 schlägt ein einstückig aus Kunststoff gespritztes Befestigungselement vor, bei dem am Umfang vorstehende Rastelemente zum Verrasten in einem kreisrunden Loch angeordnet sind. Das Element ist nach einmaliger Montage jedoch aufgrund seiner Gestaltung nur unter Beschädigungen wieder zu lösen und daher nicht mehrfach verwendbar.

In US 5 058 356 wird ein Befestigungselement beschrieben, welches zur Befestigung von Dekorationselementen dient. Bei diesem Element steckt eine in dem zu befestigenden Bauteil verrastbare Metallfeder auf einem T-Träger-förmig ausgebildeten Schaft. Das Element ist jedoch recht aufwendig in der Herstellung.

Derartige Befestigungselemente sollen ein Loch in dem Bauelement und ein im wesentlichen fluchtendes Loch im zu befestigenden Teil rastend miteinander verbinden, so daß die Verbindung bei der Montage durch Ausübung von Druck auf das Bauelement hergestellt werden kann. Ferner soll eine Demontage durch Abziehen ohne Zerstörung des Bleches, des Bauelementes oder des Befestigungselementes möglich sein. Damit das Befestigungselement an der Außenseite des Bauelementes nicht sichtbar ist, werden häufig an die Bauelemente auf der mit dem Blech zu verbindenden Seite Halteteile in Form eines flachen Bügels angespritzt, die das Loch zur Aufnahme des Befestigungselementes tragen.

Aufgabe der vorliegenden Erfindung ist es, ein Befestigungselement anzugeben, das den obengenannten Anforderungen genügt und über lange Zeit eine feste Verbindung sicherstellt.

Diese Aufgabe wird erfindungsgemäß dadurch gelöst, daß auf dem Kopfteil eine an dem Kopfteil anliegende Metallklammer steckt, deren beide Schenkel jeweils eine Rastfeder bilden, welche einen spitzen Winkel zur Längsachse des Kunststoffkörpers einnehmen, wobei die Rastfedern die Ränder der Öffnung im Blech montierten Zustand hintergreifen und daß das Kopfteil Auflagen aufweist, welche nach innen gekröpfte Teile der Schenkel der Metallklammer auf der dem Fußteil zugewandten Seite des Kopfteils hintergreifen.

Das erfindungsgemäße Befestigungselement ermöglicht außer einer zuverlässigen Verbindung eine einfache Montage des Befestigungselementes im Bauelement sowie des Bauelementes mit dem befestigten Befestigungselement am Blech. Insbesondere wird durch das erfindungsgemäße Befestigungselement sichergestellt, daß durch Fixierung der Lage des Befestigungselementes gegenüber derjenigen Oberfläche des Bauelementes, welche bei der Montage in unmittelbare Berührung mit dem Blech gelangt, ein sicheres Einrasten im Blechteil erfolgt. Gleichzeitig bewirkt das erfindungsgemäße Befestigungselement ein Abstützen des

Befestigungselementes innerhalb des Bauelementes, so daß ein Druck bei der Montage ohne eine Verformung des Bauelementes auf das Befestigungselement ausgeübt wird.

Eine vorteilhafte Ausgestaltung der Erfindung besteht darin, daß das Kopfteil unter Bildung der Vorsprünge auf einem Schaft aufsitzt.

Diese Ausgestaltung ist vorzugsweise dadurch weitergebildet, daß das Kopfteil im wesentlichen halbzylinderförmig ist, wobei die Mantelfläche des Kopfteils den Kunststoffkörper abschließt und die Mantelfläche in Umfangsrichtung begrenzende Kanten über ein Mittelteil des Kunststoffkörpers hervorstehen und die Auflagen für die Metallklammer bilden. Dadurch werden die Haltekräfte vom Blech über die Rastfedern auf das Kopfteil übertragen.

Um Toleranzen besser ausgleichen zu können, ist dabei vorzugsweise vorgesehen, daß die Kröpfungen der Schenkel und das Kopfteil derart ausgebildet sind, daß die Metallklammer schwenkbar auf dem Kopfteil gelagert ist. Dies trifft jedoch nur im noch nicht montierten Zustand zu. Im montierten Zustand werden die Schenkel der Metallklammer zusammengedrückt, so daß sich der obere Teil der Metallklammer fest um das Kopfteil legt. Insbesondere die Kröpfungen der Metallklammer pressen dann an die Kanten des Kopfteils und bewirken eine dauerhafte Spannung auch, wenn sich der Kunststoffkörper durch Materialfluß etwas verformen sollte. Im Falle der Innenverkleidung in einem Kraftfahrzeug wird dadurch eine Geräuschbildung auch nach längerer Laufzeit ausgeschlossen.

Eine weitere vorteilhafte Ausgestaltung besteht darin, daß das Kopfteil mindestens teilweise walzenförmig ausgebildet ist und von der Metallklammer in einem Winkel umschlungen wird, der größer als 180°, vorzugsweise 270°, ist. Dadurch wird ebenfalls eine günstige Einleitung der Haltekräfte in das Kopfteil sichergestellt.

Bei einer Weiterbildung der Erfindung ist vorgesehen, daß die Rastfedern an ihren Enden nach innen in einem Winkel gekröpft sind, der ausreichende Haltekräfte gewährleistet, jedoch eine Demontage durch Herausziehen des Befestigungselementes aus dem Blech ermöglicht.

Mit einer anderen Weiterbildung der Erfindung wird eine Dichtung des Loches im Blech dadurch erzielt, daß der Kunststoffkörper vom Fußteil beabstandet eine tellerförmige Dichtscheibe trägt, die im montierten Zustand mit ihrem Rand auf dem Blech aufliegt.

Das erfindungsgemäße Befestigungselement kann auch derart ausgestaltet sein, daß der Kunststoffkörper im Mittelteil einen doppel-T-förmigen Querschnitt mit einem Steg und zwei Wangen aufweist, wobei die Wangen das Kopfteil überragen und somit eine seitliche Führung für die Metallklammer bilden. Dabei ist vorzugsweise vorgesehen, daß im Bereich der Enden der Rastfedern aus dem Steg Nasen hervorstehen, die einen Schwenkwinkel der Metallklammer begrenzen.

Der Schaft ist im Bereich des Fußteils, vorzugsweise mit einem trapezförmigen Querschnitt versehen, so daß er nach dem Einsetzen in eine seitlich offene Öffnung des Retainers dort einrastet. Das Fußteil ist vorzugsweise asymmetrisch ausgebildet, so daß ein Einsetzen in den Retainer in einer falschen Winkellage unmöglich ist.

Ein Ausführungsbeispiel der Erfindung ist in der Zeichnung anhand mehrerer Figuren dargestellt und in der nachfolgenden Beschreibung näher erläutert. Es zeige:
- Fig. 1: vier Ansichten des Kunststoffkörpers,
- Fig. 2: eine perspektivische Ansicht des kompletten Befestigungselementes und
- Fig. 3: eine perspektivische Ansicht des montierten Befestigungselementes, wobei sowohl das Bauelement, insbesondere die Kunststoffverkleidung, als auch das Blech jeweils als rechteckige Ausschnitte dargestellt sind.

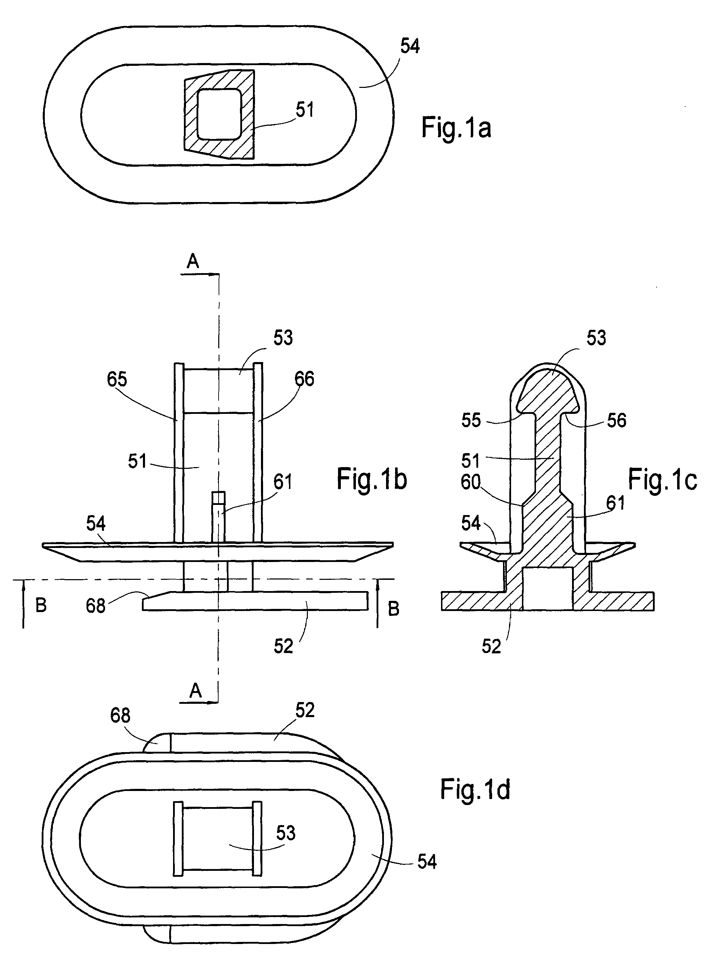

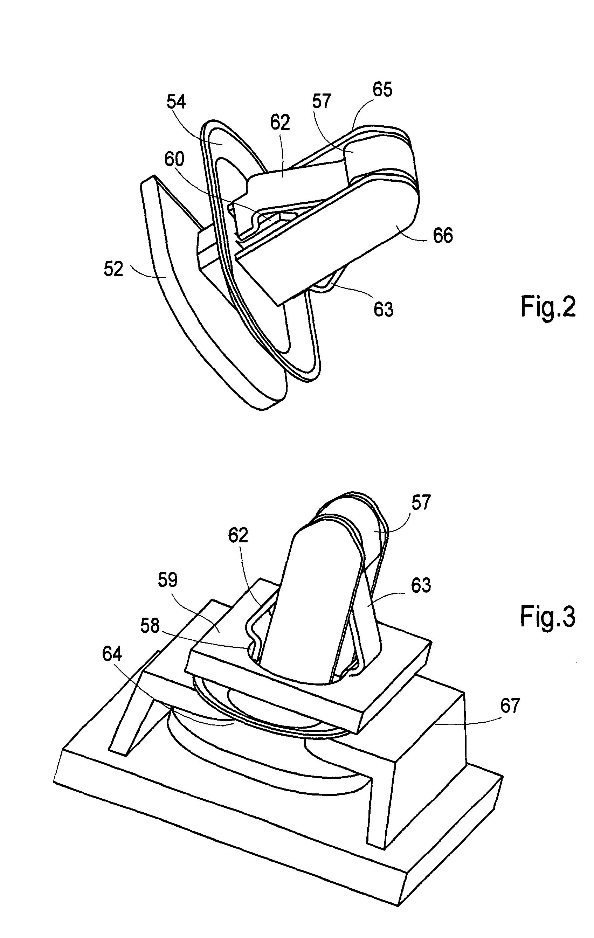

Der in den Figuren 1a bis 1d dargestellte Kunststoffkörper weist einstückig einen Schaft 51, ein Fußteil 52, ein Kopfteil 53 und eine Dichtscheibe 54 auf. Das Kopfteil 53 ist nach oben hin walzenförmig und erweitert sich nach unten, so daß Vorsprünge 55, 56 für die Klammer 57 (Fig. 2, Fig. 3) gebildet werden. Die über das Kopfteil 53 gesteckte Metallklammer 57 kann insbesondere im entspannten Zustand eine Kippbewegung ausführen, was das Eindrücken in das Befestigungsloch 58 im Blech 59 erleichtert, auch wenn das Befestigungsteil dabei leicht schräg gehalten wird. Die Kippbewegung der Klammer 57 wird allerdings durch Rippen 60, 61 am Mittelteil 51 begrenzt. Fig. 1b zeigt ferner Schnittebenen A-A und B-B für die Figuren 1a und 1c.

Das Mittelteil 51 und das Kopfteil 53 werden von zwei Wangen 65, 66 begrenzt, die ein Abrutschen der Klammer 57 vom Kopfteil 53 verhindern.

Die von den Schenkeln der Klammer 57 gebildeten Rastfedern 62, 63 sind derart geformt, daß das Blech zwischen den Rastfedern 62, 63 und der Dichtscheibe 54 festgeklemmt wird. Dabei sind die Rastfedern 62, 63 im unteren Teil mit einem Winkel nach innen gekröpft, der einerseits ausreichende Haltekräfte gewährleistet, andererseits jedoch eine Demontage durch Herausziehen des Befestigungselementes aus dem Blech 59 ermöglicht.

Die Rastfedern 62, 63, insbesondere der Abstand zwischen den Kröpfungen in den Endbereichen und denen, die sich im montierten Zustand auf die Anlageflächen 55, 56 des Kopfteils andrücken, sind derart ausgelegt, daß selbst bei einem allmählichen Fließen des Kunststoffkörpers das Blech 59 fest eingespannt bleibt und Klappergeräusche vermieden werden.

Zwischen der Dichtscheibe 54 und dem Fußteil 52 ist der Schaft etwa trapezförmig ausgebildet. Dieses erleichtert ein Einführen in die Einführöffnung 64 des Retainers 67, der beispielsweise an einer Kunststoffverkleidung angeformt ist. In der Montageposition verrastet der Kunststoffkörper mit in den Figuren nicht sichtbaren Vorsprüngen, ist also im Retainer 65 gesichert. Der Fuß 52 ist asymmetrisch ausgebildet, so daß er nur in der für einen sicheren Halt vorgesehenen Drehlage in den Retainer 65 eingesetzt werden kann. Eine Anschrägung 68 erleichtert das Einführen.

## Patentansprüche

1. Befestigungselement zur Verbindung von Kunststoffteilen, insbesondere Verkleidungen, an Blechen, insbesondere Karosserieteilen eines Kraftfahrzeugs, bestehend aus einem Kunststoffkörper (51 bis 54) mit einem Fußteil (52) zum Einsetzen in ein bügelförmiges Halteteil des Kunststoffteils und einem Kopfteil (53), welches im montierten Zustand durch eine Öffnung im Blech ragt, **dadurch gekennzeichnet, daß** auf dem Kopfteil (53) eine an dem Kopfteil (53) anliegende Metallklammer (57) steckt, deren beide Schenkel jeweils eine Rastfeder (62, 63) bilden, welche einen spitzen Winkel zur Längsachse des Kunststoffkörpers einnehmen, wobei die Rastfedern (62, 63) die Ränder der Öffnung (58) im Blech (59) im montierten Zustand hintergreifen und daß das Kopfteil (53) Auflagen (55, 56) aufweist, welche nach innen gekröpfte Teile der Schenkel (62, 63) der Metallklammer (57) auf der dem Fußteil (52) zugewandten Seite des Kopfteils (53) hintergreifen.

2. Befestigungselement nach Anspruch 1, **dadurch gekennzeichnet, daß** das Kopfteil (53) unter Bildung der Vorsprünge (55, 56) auf einem Schaft (51) aufsitzt.

3. Befestigungselement nach Anspruch 1, **dadurch gekennzeichnet, daß** das Kopfteil (53) im wesentlichen halbzylinderförmig ist, wobei die Mantelfläche des Kopfteils (53) den Kunststoffkörper abschließt und die Mantelfläche in Umfangsrichtung begrenzende Kanten über ein Mittelteil (51) des Kunststoffkörpers hervorstehen und die Auflagen (55, 56) für die Metallklammer (57) bilden.

4. Befestigungselement nach einem der vorhergehenden Ansprüche, **dadurch gekennzeichnet, daß** die Kröpfungen der Schenkel (62, 63) und das Kopfteil (53) derart ausgebildet sind, daß die Metallklammer (57) schwenkbar auf dem Kopfteil (53) gelagert ist.

5. Befestigungselement nach einem der Ansprüche 1, 2 oder 4, **dadurch gekennzeichnet, daß** das Kopfteil mindestens teilweise walzenförmig ausgebildet ist und von der Metallklammer in einem Winkel umschlungen wird, der größer als 180°, vorzugsweise 270°, ist.

6. Befestigungselement nach einem der vorhergehenden Ansprüche, **dadurch gekennzeichnet, daß** die Rastfedern (62, 63) an ihren Enden nach innen in einem Winkel gekröpft sind, der ausreichende Haltekräfte gewährleistet, jedoch eine Demontage durch Herausziehen des Befestigungselementes aus dem Blech ermöglicht.

7. Befestigungselement nach einem der vorhergehenden Ansprüche, **dadurch gekennzeichnet, daß** der Kunststoffkörper vom Fußteil (52) beabstandet eine tellerförmige Dichtscheibe (54) trägt, die im montierten Zustand mit ihrem Rand auf dem Blech (59) aufliegt.

8. Befestigungselement nach einem der vorhergehenden Ansprüche, **dadurch gekennzeichnet, daß** der Kunststoffkörper im Mittelteil einen doppel-T-förmigen Querschnitt mit einem Steg (51) und zwei Wangen (65, 66) aufweist, wobei die Wangen (65, 66) das Kopfteil (53) überragen und somit eine seitliche Führung für die Metallklammer (57) bilden.

9. Befestigungselement nach Anspruch 8, **dadurch gekennzeichnet, daß** im Bereich der Enden der Rastfedern (62, 63) aus dem Steg Nasen (60, 61) hervorstehen, die einen Schwenkwinkel der Metallklammer (57) begrenzen.

10. Befestigungselement nach einem der vorhergehenden Ansprüche, **dadurch gekennzeichnet, daß** das Fußteil (52) asymmetrisch gebildet ist.

11. Befestigungselement nach einem der vorhergehenden Ansprüche, **dadurch gekennzeichnet, daß** der Kunststoffkörper in der Nähe des Fußteils (52) mit einem mindestens teilweise trapezförmigen Querschnitt versehen ist.

## Claims

1. Fastening element for joining plastic components, in particular panelling, on metal sheets, in particular body components of a motor vehicle, comprising a plastic body (51 to 54) with a base (52) for insertion into a yokeshaped holding part of the plastic component and a head (53) which in an assembled state protrudes through an opening in the metal sheet, **characterised in that** onto the head (53) is pushed a metal clamp (57) which abuts the head (53) and the two shanks of which form a respective detention spring (62, 63) and which are positioned at an acute angle to the longitudinal axis of the plastic body, and the detention springs (62, 63) reach in the assembled state behind the edges of the opening (58) in the metal sheet (59), and the head (53) comprises seating surfaces (55, 56) which reach behind inwardly crimped parts of the shanks (62, 63) of the metal clamp (57) at the side of the head (53) facing towards the base (52).

2. Fastening element according to Claim 1, **characterised in that** the head (53) is seated on a shaft (51) whilst forming the protrusions (55, 56).

3. Fastening element according to Claim 1, **characterised in that** the head (53) is essentially semi-cylindrical, and the casing surface of the head (53) seals the plastic component, and edges which define the casing surface in the peripheral direction protrude over a central part (51) of the plastic body and form the seating surfaces (55, 56) for the metal clamp (57).

4. Fastening element according to one of the above claims, **characterised in that** the crimping of both the shanks (62, 63) and the head (53) is designed in such a manner that the metal clamp (57) is mounted so as to be pivotal on the head (53).

5. Fastening element according to one of Claims 1, 2 or 4, **characterised in that** the head is at least partially rollershaped and surrounded by the metal clamp at an angle of over 180°, preferably 270°.

6. Fastening element according to one of the above claims, **characterised in that** the detention springs (62, 63) are at their ends inwardly crimped at an angle which ensures sufficient holding strengths whilst allowing dismantling by pulling the fastening element out of the metal sheet.

7. Fastening element according to one of the above claims, **characterised in that** the plastic body carries at a distance from the base (52) a dishshaped sealing disc (54) which in its assembled state is seated with its edge on the metal sheet (59).

8. Fastening element according to one of the above claims, **characterised in that** the plastic component has in the central part a double-T-shaped cross-section with a web (51) and two sidewalls (65, 66), and the sidewalls (65, 66) protrude over the head (53), thus establishing a lateral guide for the metal clamp (57).

9. Fastening element according to Claim 8, **characterised in that** in the area of the ends of the detention springs (62, 63) noses (60, 61) protrude from the web which define a pivotal angle of the metal clamp (57).

10. Fastening element according to one of the above claims, **characterised in that** the base (52) is of asymmetrical design.

11. Fastening element according to one of the above claims, **characterised in that** the plastic component is in the vicinity of the base (52) provided with an at least partially trapezoidal cross-section.

## Revendications

1. Elément de fixation pour la liaison de pièces en matière synthétique, en particulier de revêtements, sur des tôles, en particulier des pièces de carrosserie d'un véhicule automobile, se composant d'un corps en matière synthétique (51 à 54) avec une partie inférieure (52) à placer dans une pièce de maintien en forme de bride de la pièce en matière synthétique et une partie supérieure (53) qui passe par une ouverture dans la tôle lorsque l'élément est monté, **caractérisé en ce que** sur la partie supérieure (53) est enfichée une agrafe métallique (57) s'appuyant sur la partie supérieure (53) et dont les deux côtés constituent respectivement un ressort d'arrêt (62, 63), qui forme un angle aigu par rapport à l'axe longitudinal du corps en matière synthétique, les ressorts d'arrêt (62, 63) s'accrochant derrière les bords de l'ouverture (58) dans la tôle (59) lorsque l'élément est monté et **en ce que** la partie supérieure (53) est munie d'appuis (55, 56) qui, du côté dirigé vers la partie inférieure (52) de la partie supérieure (53), s'accrochent derrière des parties recourbées vers l'intérieur des côtés (62, 63) de l'agrafe métallique (57).

2. Elément de fixation selon la revendication 1,
**caractérisé en ce que** la partie supérieure (53) repose sur une tige (51) en formant les avancées (55, 56).

3. Elément de fixation selon la revendication 1,
**caractérisé en ce que** la partie supérieure (53) a sensiblement une forme semi-cylindrique, l'enveloppante de la partie supérieure (53) obturant le corps en matière synthétique et des bords, qui limitent l'enveloppante en direction circonférentielle, dépassant d'une partie centrale (51) du corps en matière synthétique en formant les appuis (55, 56) pour l'agrafe métallique (57).

4. Elément de fixation selon l'une des revendications précédentes, **caractérisé en ce que** les courbures des côtés (62, 63) et la partie supérieure (53) sont conçues de manière telle que l'agrafe métallique (57) repose de manière pivotante sur la partie supérieure (53).

5. Elément de fixation selon l'une des revendications 1, 2 ou 4, **caractérisé en ce que** la partie supérieure a au moins partiellement la forme d'un tambour en étant entourée par l'agrafe métallique selon un angle, qui est supérieur à 180°, de préférence de 270°.

6. Elément de fixation selon l'une des revendications précédentes, **caractérisé en ce que** les extrémités des ressorts d'arrêt (62, 63) sont recourbées vers l'intérieur selon un angle, qui garantit des efforts de maintien suffisants tout en permettant un démontage par une extraction de l'élément de fixation hors de la tôle en exerçant une traction sur cet élément.

7. Elément de fixation selon l'une des revendications précédentes, **caractérisé en ce que** le corps en matière synthétique est muni à une certaine distance de la partie inférieure (52) d'un disque d'étanchéité en forme d'assiette (54) dont le bord repose sur la tôle (59) lorsque l'ensemble est monté.

8. Elément de fixation selon l'une des revendications précédentes, **caractérisé en ce que** le corps en matière synthétique comprend sur la partie centrale une section en forme de double T avec une nervure (61) et deux joues (65, 66), les joues (65, 66) dépassant la partie supérieure (53) en formant ainsi un guidage latéral pour l'agrafe métallique (57).

9. Elément de fixation selon la revendication 8,
**caractérisé en ce que** des taquets (60, 61), qui délimitent un angle de pivotement de l'agrafe métallique (57), dépassent de la nervure dans la zone des extrémités des ressorts d'arrêt (62, 63).

10. Elément de fixation selon l'une des revendications précédentes, **caractérisé en ce que** la partie inférieure (52) a une forme asymétrique.

11. Elément de fixation selon l'une des revendications précédentes, **caractérisé en ce qu'**à proximité de la partie inférieure (52) le corps en matière synthétique a une section de forme au moins partiellement trapézoïdale.
